# EUROPÄISCHE PATENTANMELDUNG

(11) **EP 4 389 543 A1**
(43) Veröffentlichungstag der Anmeldung: **26.06.2024**
(21) Anmeldenummer: 23211642.6
(22) Anmeldetag: 23.11.2023
(51) Int. Cl.: B60T 8/17, B60T 17/22

(54) **VERFAHREN ZUM ÜBERPRÜFEN DES ZUSTANDS EINES FAHRZEUGS UND FAHRZEUG MIT ZUORDNUNGSPRÜFEINRICHTUNG**

(30) Priorität: 21.12.2022 DE 102022214223
(71) Anmelder: Siemens Mobility GmbH, 81739 München (DE)
(72) Erfinder: Knoll, Markus, 96172 Mühlhausen (DE)
(74) Vertreter: Siemens Patent Attorneys

(57) **Zusammenfassung**

Die Erfindung bezieht sich unter anderem auf ein Verfahren zum Überprüfen des Zustands eines Fahrzeugs, das zwei oder mehr Achsen (Al-A4) sowie zwei oder mehr Sensoren (S1-S4) aufweist, die auswertungsseitig jeweils einer der Achsen (Al-A4) zugeordnet sind. Erfindungsgemäß ist vorgesehen, dass eine Zuordnungsprüfung durchgeführt wird, bei der eine der Achsen (Ai) gezielt anders beschleunigt oder gebremst wird als die anderen Achsen (Aj) des Fahrzeugs, mit den Sensoren (Sl-S4) Messwerte (M) erfasst werden, die die Drehzahl oder die Rotationsbeschleunigung der dem jeweiligen Sensor (S1-S4) physikalisch zugeordneten Achse (Al-A4) angeben, derjenige Sensor (Se) ermittelt wird, der die zu der anders beschleunigten oder gebremsten Achse (Ai) am besten passenden Messwerte (M) erzeugt, und geprüft wird, ob der so ermittelte Sensor (Se) auswertungsseitig tatsächlich der anders beschleunigten oder gebremsten Achse (Ai) zugeordnet ist.

## Beschreibung

Die Erfindung bezieht sich auf ein Verfahren zum Überprüfen des Zustands eines Fahrzeugs, das zwei oder mehr Achsen sowie zwei oder mehr Sensoren aufweist, die auswertungsseitig jeweils einer der Achsen zugeordnet sind.

Trotz genauer Vorgaben und Sorgfalt kann es bei der Herstellung von Schienenfahrzeugen passieren, dass die Leitungen von Drehzahlsensoren an den falschen Eingang bzw. den falschen Sensoranschluss des einlesenden Fahrzeugsteuergerätes angeschlossen werden. Die Konsequenz ist dann, dass in der Steuerung die Zuordnung zwischen Drehzahlsignal zu Achse nicht mehr stimmt. Wenn zum Beispiel die Leitung des Drehzahlsensors, der die Drehzahl einer ersten Achse eines Wagens ermittelt, an den Eingang bzw. Sensoranschluss des Steuergeräts für die zweite Achse angeschlossen wird, interpretiert das Fahrzeugsteuergerät das Drehzahlsignal an diesem Eingang als Drehzahl der zweiten Achse, obwohl das Signal von der ersten Achse gemessen wird.

Ein solcher Fehler kann von dem Fahrzeugsteuergerät nicht ohne Weiteres erkannt werden. Der Fehler kann aber für einige Funktionen in der Steuerung zu fehlerhaften Ergebnissen führen, wenn zum Beispiel bei schlechten Haftbedingungen (nasse Schiene, Laub auf der Schiene) beim Beschleunigen oder Bremsen aufgrund von Schleudervorgängen oder Radblockierungen die Drehzahlen der Achsen sich merklich voneinander unterscheiden. Bei schlechten Haftbedingungen und vertauschten Sensorleitungen sind zum Beispiel folgende Funktionen beeinträchtigt:
- Die Bestimmung der Bremsleistung und -energie einer Achse mit vertauschten Drehzahlsensoren wird falsch berechnet.
- Der Gleit- und Schleuderschutz funktioniert nicht korrekt und reduziert die betragsmäßige Brems- oder Traktionskraft der falschen Achse. Damit wird ein zu hoher Schlupf der richtigen Achse nicht korrigiert und es treten Schäden am Rad und/oder an der Infrastruktur auf.

Bei Fahrzeugen mit zwei Drehzahlsensoren pro Achse (typischerweise bei Schienenfahrzeugen im Hochgeschwindigkeitsbereich) kann geprüft werden, ob die zwei gemessenen Drehzahlen der gleichen Achse übereinstimmen. Wenn Sensorleitungen einer der beiden Drehzahlsensoren vertauscht sind, sind die Drehzahlsignale bei hohem Radschlupf an der gleichen Achse unterschiedlich, und es kann eine Meldung für das Wartungspersonal abgesetzt werden, möglicherweise bevor es zu Schäden kommt.

Bei Fahrzeugen mit nur einem Drehzahlsensor pro Achse fällt jedoch der Fehler typischerweise erst auf, wenn es zu Schäden aufgrund eines scheinbar nicht funktionierenden Gleit- oder Schleuderschutzes kommt. Anhand der nachträglichen Auswertung aus den Messschrieben (falls vorhanden) kann man unter Umständen darauf schließen, dass Sensorleitungen vertauscht sind, jedoch ist dann ein Schaden bereits entstanden.

Der Erfindung liegt die Aufgabe zugrunde, ein Verfahren anzugeben, mit dem sich der Zustand eines Fahrzeugs hinsichtlich der auswertungsseitigen Zuordnung zwischen Achsen und Sensoren einfach durchführen lässt.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass eine Zuordnungsprüfung durchgeführt wird, bei der eine der Achsen gezielt anders beschleunigt oder gebremst wird als die anderen Achsen des Fahrzeugs, mit den Sensoren Messwerte erfasst werden, die die Drehzahl oder die Rotationsbeschleunigung der dem jeweiligen Sensor physikalisch zugeordneten Achse angeben, derjenige Sensor ermittelt wird, der die zu der anders beschleunigten oder gebremsten Achse am besten passenden Messwerte erzeugt, und geprüft wird, ob der so ermittelte Sensor auswertungsseitig tatsächlich der anders beschleunigten oder gebremsten Achse zugeordnet ist.

Ein wesentlicher Vorteil des erfindungsgemäßen Verfahrens ist darin zu sehen, dass dieses beispielsweise von einem Fahrzeugsteuergerät im Rahmen des Fahrbetriebs des Fahrzeugs durchgeführt werden kann, indem eine achsindividuelle Ansteuerung der Achsen hinsichtlich der Achsbeschleunigung oder der Achsbremsung mit den Messwerten der Sensoren verglichen wird und die Messwertverläufe auswertungsseitig auf Plausibilität geprüft werden.

Ein weiterer wesentlicher Vorteil des erfindungsgemäßen Verfahrens besteht darin, dass dieses eine Sensorzuordnungsprüfung auch dann erlaubt, wenn den Achsen nur ein einziger Sensor zur Erfassung der Drehzahl oder der Rotationsbeschleunigung zugeordnet ist. Ein Anschlussfehler der Sensoren kann in vorteilhafter Weise erkannt werden, noch bevor durch eine falsche Regelung (Kraftreduktion an der falschen Achse) Schäden am Rad und/oder der Infrastruktur des Fahrzeugs auftreten.

Die physikalische Zuordnung zwischen Sensor und Achse wird vorzugsweise durch die physikalische Anordnung und Ausgestaltung der Sensoren bestimmt, und zwar derart, dass die Sensoren jeweils die Drehzahl oder Rotationsbeschleunigung der physikalisch zugeordneten Achse messen.

Die auswertungsseitige Zuordnung zwischen Sensor und Achse wird vorzugsweise durch den Anschluss der Sensoren an eine Auswertungseinrichtung, beispielsweise ein Fahrzeugsteuergerät, bestimmt; die auswertungsseitige Zuordnung gibt an, wie die Sensorsignale hinsichtlich ihrer Zuordnung zu den Achsen auswertungsseitig behandelt werden. Im fehlerfreien Fall stimmt die physikalische Zuordnung zwischen Achse und Sensor mit der auswertungsseitigen Zuordnung zwischen Achse und Sensor überein, im Falle eines Fehlers, beispielsweise eines Verdrahtungsfehlers, unterscheiden sich die physikalische und die auswertungsseitige Zuordnung voneinander.

Vorteilhaft ist es, wenn ein Fehlersignal erzeugt wird, wenn der ermittelte Sensor auswertungsseitig einer anderen Achse als der der anders beschleunigten oder gebremsten Achse zugeordnet ist.

Auch kann in vorteilhafter Weise ein Bestätigungssignal erzeugt werden, wenn der ermittelte Sensor auswertungsseitig tatsächlich der anders beschleunigten oder gebremsten Achse zugeordnet ist.

Bei einer besonders bevorzugten Ausführungsvariante ist vorgesehen, dass nacheinander jede der Achsen jeweils einer Zuordnungsprüfung unterzogen wird, bei der geprüft wird, ob der der Zuordnungsprüfung unterzogenen Achse auswertungsseitig der richtige Sensor zugeordnet ist, indem die der Zuordnungsprüfung unterzogene Achse gezielt anders beschleunigt oder gebremst wird als die anderen Achsen des Fahrzeugs, während der Zuordnungsprüfung mit den Sensoren Messwerte erfasst werden, die die Drehzahl oder die Rotationsbeschleunigung der jeweils physikalisch zugeordneten Achse angeben, derjenige Sensor ermittelt wird, der die zu der anders beschleunigten oder gebremsten Achse am besten passenden Messwerte erzeugt, und geprüft wird, ob der so ermittelte Sensor auswertungsseitig tatsächlich der der Zuordnungsprüfung unterzogenen Achse zugeordnet ist.

Für jede der Achsen wird vorzugsweise ein Fehlersignal erzeugt, für die im Rahmen der Zuordnungsprüfung festgestellt wird, dass der ermittelte Sensor auswertungsseitig einer anderen Achse als der geprüften Achse zugeordnet ist.

Für jede der Achsen wird vorzugsweise ein Bestätigungssignal erzeugt, für die im Rahmen der Zuordnungsprüfung festgestellt wird, dass der ermittelte Sensor auswertungsseitig der geprüften Achse zugeordnet ist.

Bei einer vorteilhaften Ausgestaltung des Verfahrens ist vorgesehen, dass die der Zuordnungsprüfung unterzogene Achse stärker als die anderen Achsen beschleunigt oder gebremst wird, ermittelt wird, welcher Sensor die höchste Drehzahländerung anzeigt, und geprüft wird, ob der so ermittelte Sensor auswertungsseitig tatsächlich der stärker beschleunigten oder gebremsten Achse zugeordnet ist.

Die Achsen, die während des Verfahrens nicht der Zuordnungsprüfung unterzogen werden, werden vorzugsweise unbeschleunigt oder ungebremst betrieben.

Mit Blick auf eine besonders zuverlässige Zuordnungsprüfung wird es als vorteilhaft angesehen, wenn die der Zuordnungsprüfung unterzogene Achse gemäß einem vorgegebenen zeitlichen Ansteuermuster beschleunigt oder gebremst wird und die übrigen Achsen anders beschleunigt oder gebremst werden oder kräftefrei betrieben werden, ermittelt wird, ob bei einem einzigen Sensor die Messwerte mit dem Ansteuermuster über ein vorgegebenes Mindestmaß hinaus korreliert sind, und falls dies der Fall ist, geprüft wird, ob der so ermittelte einzige Sensor auswertungsseitig tatsächlich der der Zuordnungsprüfung unterzogenen Achse zugeordnet ist.

Bei einer anderen als besonders vorteilhaft angesehenen Verfahrensvariante ist vorgesehen, dass die der Zuordnungsprüfung unterzogene Achse kräftefrei betrieben wird und die anderen Achsen gebremst oder beschleunigt werden, in einem ersten Schritt geprüft wird, ob ein einziger der Sensoren einen Radschlupf unterhalb einer vorgegebenen ersten Radschlupfschwelle anzeigt und die übrigen Sensoren einen Radschlupf oberhalb einer vorgegebenen zweiten Radschlupfschwelle, die mindestens so groß wie die erste Radschlupfschwelle ist, anzeigen, und falls dies der Fall ist, in einem zweiten Schritt geprüft wird, ob der so ermittelte einzige Sensor auswertungsseitig tatsächlich der kräftefreien Achse zugeordnet ist.

Das Fahrzeug ist vorzugsweise ein Schienenfahrzeug, und das Verfahren wird vorzugsweise bei gegenüber trockener Schiene reduzierten Haftwertbedingungen durchgeführt.

Nach Abschluss der Zuordnungsprüfungen wird vorzugsweise eine Fehlertabelle erzeugt, die diejenigen Achsen und/oder Sensoren identifiziert, bei denen die Zuordnung zwischen Achse und Sensor falsch ist, sich also die physikalische Zuordnung zwischen Achse und Sensor von der auswertungsseitigen Zuordnung unterscheidet.

Die Erfindung bezieht sich außerdem auf ein Fahrzeug, das zwei oder mehr Achsen und zwei oder mehr Sensoren aufweist, die jeweils einer der Achsen zugeordnet sind. Erfindungsgemäß ist bezüglich eines solchen Fahrzeugs vorgesehen, dass eine Zuordnungsprüfeinrichtung vorhanden ist, die dazu ausgestaltet ist, eine Zuordnungsprüfung, beispielsweise eine solche wie oben beschrieben, durchzuführen.

Das Fahrzeug umfasst vorzugsweise eine Recheneinrichtung und einen Speicher; die Zuordnungsprüfeinrichtung wird bevorzugt durch ein in dem Speicher gespeichertes Softwaremodul gebildet, das bei Ausführung durch die Recheneinrichtung diese dazu veranlasst, das Zuordnungsverfahren wie beschrieben auszuführen.

Auch ist es von Vorteil, wenn die Zuordnungsprüfeinrichtung durch ein Softwaremodul gebildet ist, das in einem Fahrzeugsteuergerät des Fahrzeugs integriert ist. Bei Ausführung des Softwaremoduls durch das Fahrzeugsteuergerät wird dieses vorzugsweise dazu veranlasst, das Zuordnungsverfahren wie beschrieben auszuführen.

Das Fahrzeugsteuergerät ist vorzugsweise derart ausgestaltet, dass es im Falle eines erkannten Zuordnungsfehlers, zum Beispiel Verkabelungsfehlers, die auswertungsseitige Zuordnung zwischen den Sensoranschlüssen und den Sensoren bzw. Achsen korrigiert, also die auswertungsseitige Zuordnung an die messtechnisch erfasste physikalische Zuordnung anpasst.

Die Erfindung wird nachfolgend anhand von Ausführungsbeispielen näher erläutert; dabei zeigen beispielhaft:
- Figur 1: Bestandteile eines ersten Ausführungsbeispiels für ein erfindungsgemäßes Schienenfahrzeug, bei dem Sensoren mittels Verbindungskabeln korrekt an zugeordneten Sensoranschlüssen eines Fahrzeugsteuergeräts angeschlossen sind,
- Figur 2: Bestandteile eines zweiten Ausführungsbeispiels für ein erfindungsgemäßes Schienenfahrzeug, bei dem durch einen Verkabelungsfehler im Rahmen der Herstellung des Schienenfahrzeugs Verbindungskabel zwischen Sensoren und Fahrzeugsteuergerät an falschen Sensoranschlüssen des Fahrzeugsteuergeräts angeschlossen worden sind,
- Figur 3: ein Ausführungsbeispiel für eine bevorzugte Arbeitsweise einer Zuordnungsprüfeinrichtung für die Schienenfahrzeuge gemäß den Figuren 1 und 2, mit der eine unkorrekte Verkabelung, wie sie die Figur 2 zeigt, erkannt werden kann sowie eine korrekte Verkabelung, wie sie in der Figur 1 gezeigt ist, bestätigt werden kann,
- Figur 4: ein Ausführungsbeispiel für ein bevorzugtes Ansteuermuster, das zur Ansteuerung von Antriebseinheiten des Schienenfahrzeugs herangezogen werden kann, um die im Zusammenhang mit der Figur 3 beschriebene Zuordnungsprüfung besonders fehlerarm durchzuführen,
- Figur 5: ein Flussdiagramm einer Ausführungsvariante des Zuordnungsverfahrens gemäß Figur 3, bei dem anstelle einer Aktivierung der Antriebseinheiten eine Aktivierung der Bremsen erfolgt, um die Sensorzuordnung zu den Sensoranschlüssen des Fahrzeugsteuergeräts auf Korrektheit zu überprüfen,
- Figur 6: ein Flussdiagramm für ein weiteres bevorzugtes Zuordnungsverfahren zum Überprüfen der Anschlusszuordnung der Sensoren zu den Sensoranschlüssen des Fahrzeugsteuergeräts, und
- Figur 7: den zeitlichen Verlauf von Sensorsignalen und korrespondierenden Ansteuersignalen für das Ausführungsbeispiel gemäß Figur 6.

In den Figuren werden der Übersicht halber für identische oder vergleichbare Komponenten stets dieselben Bezugszeichen verwendet.

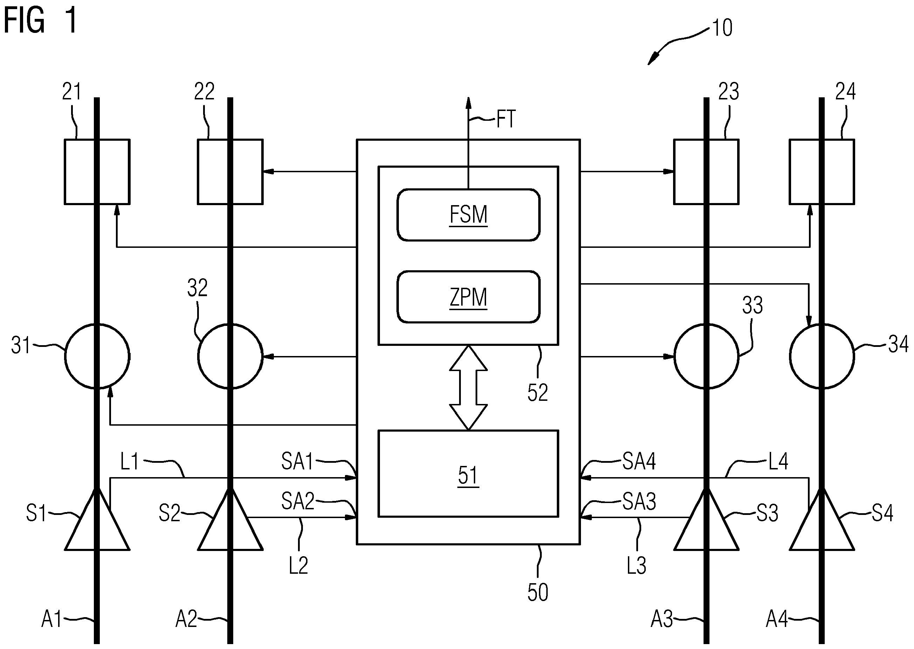

Die Figur 1 zeigt Bestandteile eines ersten Ausführungsbeispiels für ein erfindungsgemäßes Schienenfahrzeug 10 in einer schematischen Querschnittsdarstellung von oben. Das Schienenfahrzeug 10 umfasst vier Achsen Ai(i=1,...4), also eine erste Achse A1, eine zweite Achse A2, eine dritte Achse A3 und eine vierte Achse A4. Die vier Achsen A1 bis A4 sind jeweils mit einer Antriebseinheit 21, 22, 23 bzw. 24, einer Bremseinheit 31, 32, 33 bzw. 34 und einem Sensor S1, S2, S3 bzw. S4 ausgestattet.

Die Sensoren S1-S4 einer jeden Achse A1-A4 sind jeweils über eine zugeordnete Verbindungsleitung L1 bis L4 mit einem zugeordneten Sensoranschluss SA1 bis SA4 eines Fahrzeugsteuergeräts 50 verbunden.

Das Fahrzeugsteuergerät 50 umfasst eine Recheneinrichtung 51 und einen Speicher 52, in dem Softwaremodule abgespeichert sind. In der Figur 1 dargestellt sind ein Fahrzeugsteuermodulmodul FSM, das bei Ausführung durch die Recheneinrichtung 51 die übliche Fahrzeugsteuerung, also beispielsweise unter anderem eine Ansteuerung der Antriebseinheiten 21 bis 24 sowie eine Ansteuerung der Bremseinheiten 31 bis 34, durchführt.

Ein Softwaremodul ZPM ist dazu ausgebildet, eine Zuordnungsprüfung durchzuführen bzw. bei Ausführung durch die Recheneinrichtung 51 eine Zuordnungsprüfeinrichtung zu bilden.

Das Zuordnungsprüfmodul ZPM dient dazu festzustellen, ob die Sensorleitungen L1 bis L4 zwischen den Sensoren S1 bis S4 korrekt an den Sensoranschlüssen SA1 bis SA4 angeschlossen sind.

Bei dem Ausführungsbeispiel gemäß Figur 1 liegt eine korrekte Verdrahtung bzw. ein korrekter Anschluss der Sensoren S1 bis S4 an die entsprechenden Sensoranschlüsse SA1 bis SA4 vor. Eine Zuordnungsprüfung der Zuordnung der Sensoren S1 bis S4 zu den Sensoranschlüssen SA1 bis SA4 durch das Zuordnungsprüfmodul ZPM wird somit bestätigen, dass die Sensorleitungen L1 bis L4 im Rahmen der Herstellung des Schienenfahrzeugs 10 korrekt verlegt und korrekt angeschlossen worden sind.

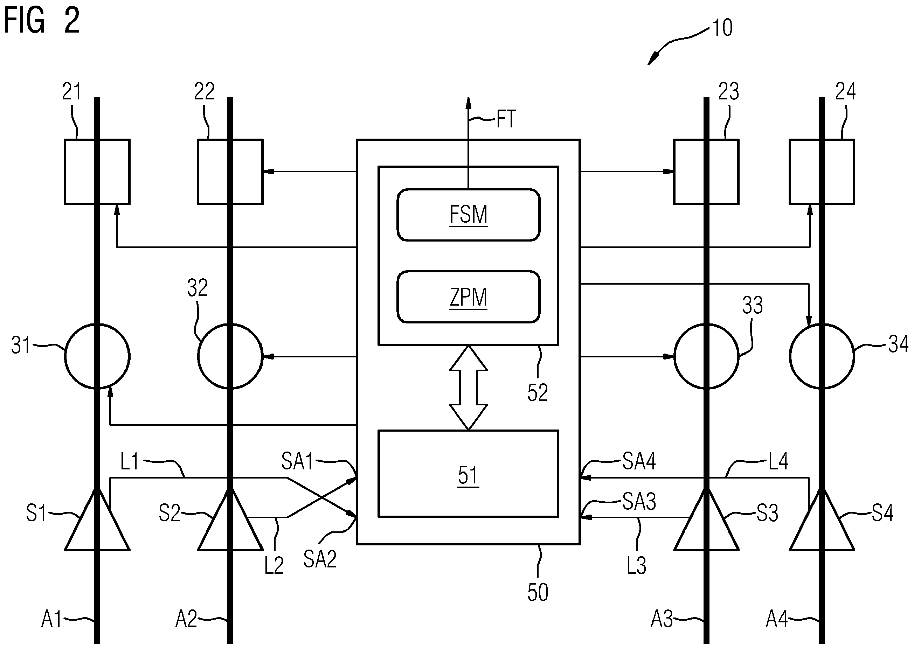

Die Figur 2 zeigt ein zweites Ausführungsbeispiel für ein erfindungsgemäßes Schienenfahrzeug 10. Im Unterschied zu dem ersten Ausführungsbeispiel gemäß Figur 1 liegt jedoch ein Verkabelungs- bzw. ein Verdrahtungsfehler vor, weil nämlich der Sensor S1 der ersten Achse A1 nicht, wie in Figur 1, korrekt an seinem zugeordneten Sensoranschluss SA1 des Fahrzeugsteuergeräts 50 angeschlossen ist, sondern stattdessen an dem Sensoranschluss SA2. Der Sensoranschluss SA1 steht mit dem Sensor S2 in Verbindung, der der zweiten Achse A2 zugeordnet ist.

Führt das Fahrzeugsteuergerät 50 das Zuordnungsprüfmodul ZPM aus bzw. eine entsprechende Zuordnungsprüfung durch, so wird das Fahrzeugsteuergerät 50 feststellen, dass ein Verkabelungsfehler vorliegt und die Sensoren S1 und S2 an die falschen Sensoranschlüsse SA2 und SA1 angeschlossen sind. Das Fahrzeugsteuergerät 50 kann diesen Fehler intern korrigieren und im Rahmen der weiteren Fahrzeugsteuerung bzw. bei der Ausführung des Fahrzeugsteuermoduls FSM berücksichtigen. Darüber hinaus kann das Fahrzeugsteuergerät 50 eine Fehlertabelle FT ausgeben, die den beschriebenen Zuordnungsfehler der Sensoren zu den Sensoranschlüssen des Fahrzeugsteuergeräts 50 beschreibt und es im Rahmen einer Wartung bzw. Reparatur des Schienenfahrzeugs 10 dem Wartungspersonal ermöglicht, den Sensoranschluss entsprechend zu korrigieren.

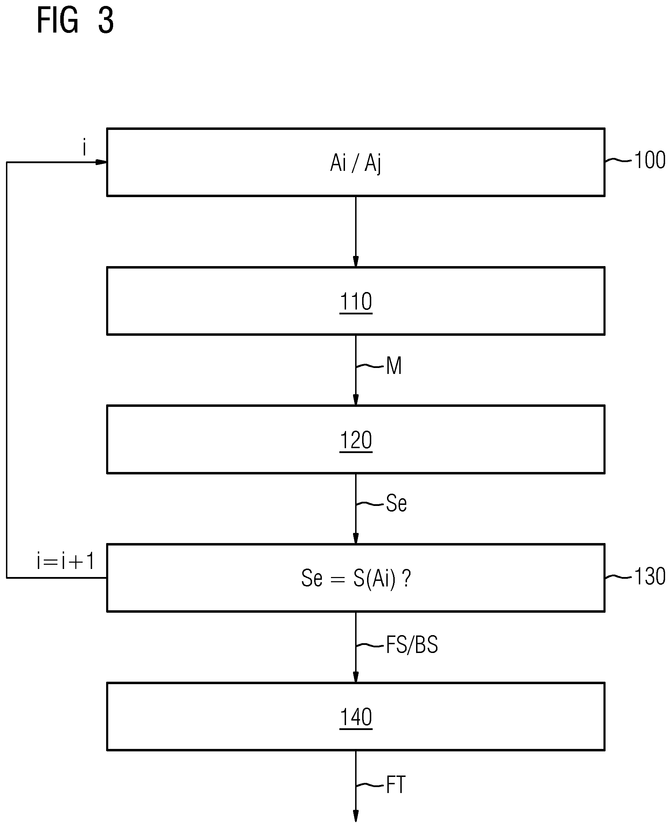

Die Figur 3 zeigt anhand eines Flussdiagramms eine bevorzugte Arbeitsweise des Zuordnungsprüfmoduls ZPM näher im Detail. Dabei wird beispielhaft davon ausgegangen, dass in jedem i-ten Prüfschritt (i=1,...4) des Zuordnungsprüfverfahrens jeweils die Antriebseinheit einer einzigen der Achsen A1 bis A4 des vierachsigen Schienenfahrzeugs 10 mit einem zeitlichen Ansteuerungsmuster angetrieben wird und die übrigen Achsen jeweils ohne das zeitliche Ansteuerungsmuster angetrieben werden und auch nicht gebremst werden.

In einem Antriebsaktivierungsschritt 100 wird die jeweils der Zuordnungsprüfung unterworfene Achse, die in der Figur 1 mit dem Bezugszeichen Ai (i=1,...4) markiert ist, mit der zugehörigen Antriebseinheit beschleunigt, und zwar vorzugsweise mit einem vorgegebenen zeitlichen Aktivierungsmuster. Die Bremseinheiten werden deaktiviert und die Antriebseinheiten der übrigen Achsen Aj(j≠i) werden ohne das zeitliche Aktivierungsmuster angesteuert.

Im Rahmen eines zum Antriebsaktivierungsschritt 100 zeitlich parallelen Messschritts 110 werden die Messwerte M der Sensoren S1 bis S4 erfasst und in einen nachgeordneten Sensorermittlungsschritt 120 verarbeitet. Im Rahmen des Sensorermittlungsschritts 120 wird geprüft bzw. ermittelt, welcher der Sensoren S1 bis S4 im zeitlichen Verlauf ein Sensorsignal erzeugt, das mit dem Aktivierungsmuster, das dem Antriebsaktivierungsschritt 100 zugrunde gelegt worden ist, am besten übereinstimmt. Der ermittelte Sensor ist in der Figur 3 mit dem Bezugszeichen Se gekennzeichnet. Die Übereinstimmungsprüfung kann in vorteilhafter Weise unter Einbezug einer Berechnung von Korrelationsfunktionen zwischen den Messwertverläufen und dem Aktivierungsmuster erfolgen.

In einem nachfolgenden Zuordnungsschritt 130 wird überprüft, ob der ermittelte Sensor Se tatsächlich derjenigen Sensor S(Ai) ist, der zu der aktivierten Achse Ai passt bzw. dieser zugeordnet ist. Wird beispielsweise im vorangegangenen Antriebsaktivierungsschritt 100 die Antriebseinheit S1 der ersten Achse A1 aktiviert, so muss der Zuordnungsschritt 130 ergeben, dass der ermittelte Sensor Se der Sensor S1 der ersten Achse A1 ist. Ist dies der Fall, so wird ausgangsseitig ein Bestätigungssignal BS erzeugt. Ist dies nicht der Fall, so wird ein Fehlersignal FS ausgegeben.

Nachdem der Zuordnungsschritt 130 abgeschlossen ist, werden der Antriebsaktivierungsschritt 100, der Messschritt 110, der Sensorermittlungsschritt 120 und der Zuordnungsschritt 130 für die jeweils nächste Achse Ai+1 des Schienenfahrzeugs 10 wiederholt. Beispielsweise kann nach einer Zuordnungsprüfung hinsichtlich der ersten Achse A1 (z. B. i=1) anschließend die zweite Achse A2 (i=2) der Zuordnungsprüfung unterzogen werden und diese zweite Achse A2 als die der Zuordnungsprüfung unterzogene Achse Ai für den Antriebsaktivierungsschritt 100 herangezogen werden.

Nachdem für alle Achsen A1 bis A4 bzw. für alle Sensoren S1 bis S4 eine entsprechende Zuordnungsprüfung vollzogen worden ist, kann in einem nachgeordneten Berichtsschritt 140 die Fehlertabelle FT erzeugt werden, die eine etwaige Fehlverdrahtung bzw. das Auftreten der Fehlersignale FS im Rahmen der Zuordnungsprüfung tabellarisch aufführt. Eine solche Fehlertabelle FT kann beispielsweise Wartungs- oder Reparaturpersonal ermöglichen, eine etwaige fehlerhafte Verkabelung der Sensoren S1 bis S4 bzw. einen falschen Anschluss der Sensorleitungen L1 bis L4 an die Sensoranschlüsse SA1 bis SA4 des Fahrzeugsteuergeräts 50 zu korrigieren. Werden keine Fehler festgestellt, so wird dies in der Fehlertabelle FT entsprechend angegeben.

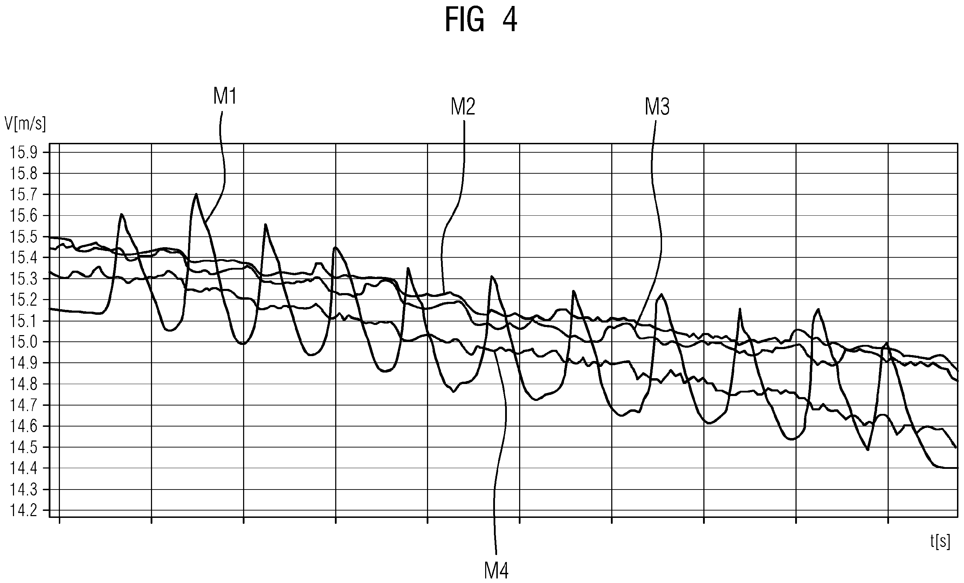

Die Figur 4 zeigt beispielhaft den zeitlichen Verlauf von Messwerten M1 bis M4 der vier Sensoren S1 bis S4 bei einer periodischen sägezahnförmigen Ansteuerung einer der Antriebseinheiten einer der Achsen A1 bis A4, beispielsweise der ersten Achse A1, über der Zeit t (in Sekunden). In der Figur 4 sind die drehzahlbezogenen Messwerte M1 bis M4 der vier Sensoren S1 bis S4 bereits in äquivalente Fahrzeuggeschwindigkeitswerte V (in Meter pro Sekunde) umgerechnet worden, beispielsweise durch Multiplikation der Rotationsgeschwindigkeit mit dem jeweiligen Radumfang.

Es lässt sich erkennen, dass die Messwerte M1 des ersten Sensors S1 einen sägezahnförmigen Messwertverlauf zeigen, wohingegen die Messwerte M2 bis M4 der übrigen Sensoren S2 bis S4 keinen entsprechenden Verlauf aufweisen. Durch eine Korrelationsprüfung der Messwertverläufe der Sensoren S1 bis S4 mit dem jeweiligen zeitlichen Ansteuermuster, mit dem die Antriebseinheit der der Zuordnungsprüfung unterzogenen Achse, hier der ersten Achse A1, beaufschlagt wurde, lässt sich somit also eine korrekte Zuordnung zwischen dem Sensor S1 und dem zugeordneten Sensoranschluss SA1 des Fahrzeugsteuergeräts 50 feststellen.

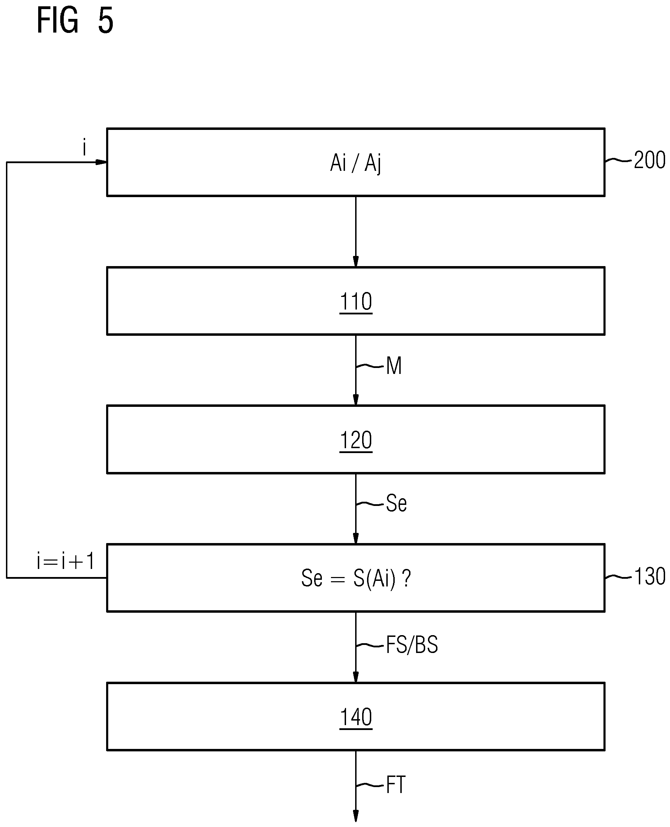

Die Figur 5 zeigt ein Flussdiagramm einer Variante einer Zuordnungsprüfung, die vom Fahrzeugsteuergerät 50 gemäß den Figuren 1 und 2 ebenfalls - alternativ oder zusätzlich zu der Zuordnungsprüfung gemäß Figur 3 - durchgeführt werden kann.

Bei dem Ausführungsbeispiel gemäß Figur 5 erfolgt die Zuordnungsprüfung nicht durch eine Ansteuerung der Antriebseinheiten 21 bis 24, sondern durch eine Ansteuerung der Bremseinheiten 31 bis 34, vorzugsweise auf der Basis eines vorgegebenen zeitlichen Bremsmusters. Mit anderen Worten ist der Antriebsaktivierungsschritt 100 gemäß Figur 3 durch einen Bremsaktivierungsschritt 200 ersetzt.

Die übrigen Verfahrensschritte, also der Messschritt 110, der Sensorermittlungsschritt 120, der Zuordnungsschritt 130 und der Berichtsschritt 140, die bereits im Zusammenhang mit der Figur 3 erläutert worden sind, können sich bei der Ausführungsvariante gemäß Figur 5 in identischer Weise an den vorgeordneten Bremsaktivierungsschritt 200 anschließen.

Im Übrigen gelten die obigen Ausführungen im Zusammenhang mit der Figur 3 für das Ausführungsbeispiel gemäß 5 entsprechend.

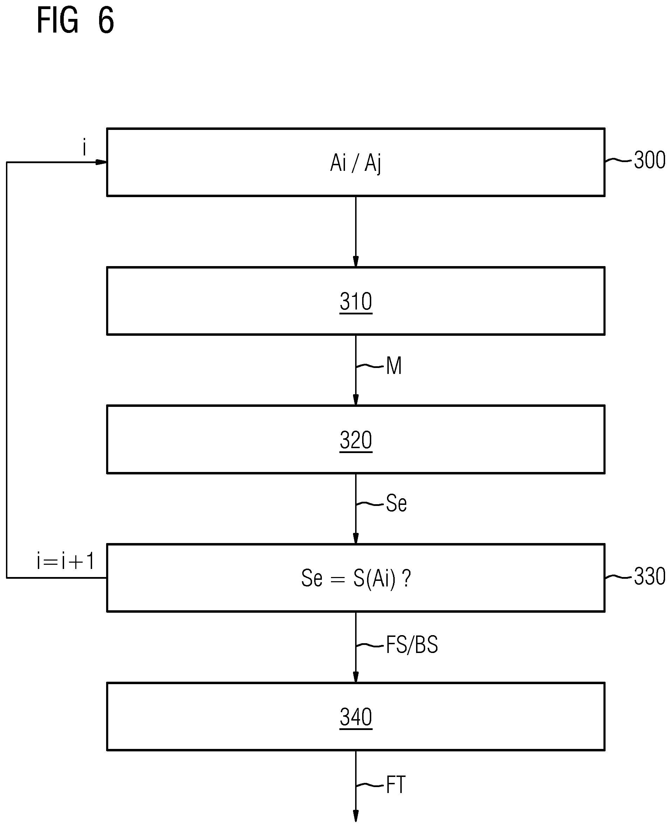

Die Figur 6 zeigt ein Flussdiagramm für ein weiteres Zuordnungsprüfverfahren, das alternativ oder zusätzlich zu dem Zuordnungsprüfverfahren gemäß den Figuren 3 und 5 durchgeführt werden kann.

Bei dem Ausführungsbeispiel gemäß Figur 6 erfolgt eine Zuordnungsprüfung für jede Achse jeweils derart, dass die der Zuordnungsprüfung unterzogene Achse kraftfrei geschaltet wird, wohingegen die übrigen Achsen beschleunigt, vorzugsweise stark beschleunigt, oder gebremst, vorzugsweise stark gebremst, werden. Wird das Verfahren bei schlechten Haftbedingungen, also bei nasser oder verschmutzter Schiene durchgeführt, so wird ein Radschlupf bei allen beschleunigten oder gebremsten Achsen feststellbar sein, wohingegen die kraftfrei geschaltete Achse schlupffrei oder zumindest weitestgehend schlupffrei sein sollte.

Bei der Verfahrensvariante gemäß Figur 6 wird also in einem Deaktivierungsschritt 300 die der jeweiligen Zuordnungsprüfung unterzogene Achse kraftfrei geschaltet, wohingegen alle übrigen Achsen beschleunigt oder gebremst werden.

In einem zeitlich parallelen Messschritt 310 werden die Messwerte M der Sensoren S1 bis S4 erfasst.

In einem Sensorermittlungsschritt 320 wird derjenige Sensor Se ermittelt, der den geringsten Radschlupf aufweist bzw. derjenige Sensor ist, der von allen Sensoren als einziger einen Radschlupf unter einer vorgegebenen Radschlupfgrenze anzeigt. Ist ein solcher einziger Sensor nicht identifizierbar, so werden der Deaktivierungsschritt 300, der Messschritt 310 und der Sensorermittlungsschritt 320 vorzugsweise wiederholt.

In einem sich daran anschließenden Zuordnungsschritt 330 wird geprüft, ob der so ermittelte Sensor Se tatsächlich zu der Achse S(Ai) gehört, die beim Deaktivierungsschritt 300 kraftfrei geschaltet worden ist. Ist dies der Fall, so wird im Zuordnungsschritt 330 ein Bestätigungssignal BS erzeugt, andernfalls ein Fehlersignal FS.

Die obigen Schritte, also der Deaktivierungsschritt 300, der Messschritt 310, der Sensorermittlungsschritt 320 und der Zuordnungsschritt 330 werden für alle Achsen des Schienenfahrzeugs 10 individuell durchgeführt. Wurde jede der Achsen einer Zuordnungsprüfung unterzogen, so wird in einem nachfolgenden Berichtsschritt 340 eine Fehlertabelle FT erstellt, die die von den Fehlersignalen FS angezeigten Zuordnungsfehler tabellarisch protokolliert. Werden keine Fehler festgestellt, so wird dies in der Fehlertabelle FT entsprechend angegeben.

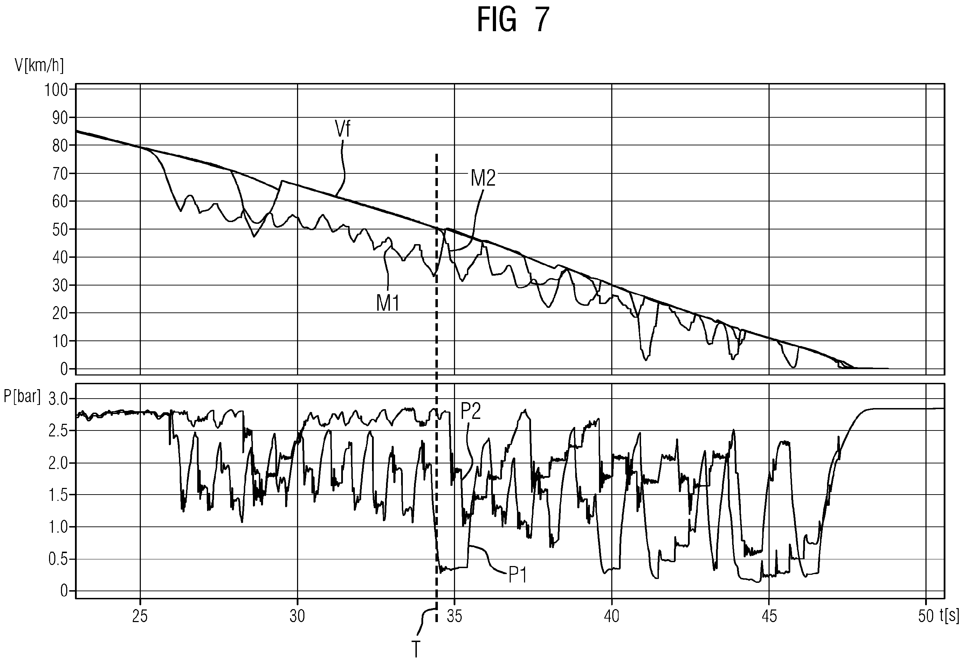

Die Figur 7 zeigt beispielhaft den Messwertverlauf der Messwerte M1 und M2 der Sensoren A1 und A2 für den Fall, dass die erste Achse A1 zum Zeitpunkt T durch Ansenken des Bremsdrucks P1 kraftfrei geschaltet wird, wohingegen die zweite Achse A2 durch einen relativ hohen Bremsdruck P2 der Bremse 32 schlupfbehaftet ist bzw. bleibt; der Bremsdruck P ist hier in bar angegeben. In der Figur 7 wurden die drehzahlbezogenen Messwerte M1 und M2 wieder bereits in Geschwindigkeitsangaben V (hier Kilometer pro Stunde) umgerechnet; Vf kennzeichnet zum Vergleich die tatsächliche Fahrzeuggeschwindigkeit.

Durch das Kraftfreischalten zum Zeitpunkt T nähern sich die Messwerte M1 des ersten Sensors S1 an die Fahrzeuggeschwindigkeit Vf an, weil sich durch das Absenken des Bremsdruckes P1 der Schlupf reduziert. Die Messwerte M2 des zweiten Sensors S2 sind wegen des bremsbedingten Schlupfes hingegen kleiner als die Fahrzeuggeschwindigkeit Vf.

Kurz nach dem Kraftfreischalten der Bremse 31 ist also in dem Messwertverlauf des Sensors S1 ein deutlicher Abfall des Radschlupfes erkennbar, wohingegen bei dem Sensorsignal des Sensors S2 ein solcher Abfall nicht auftritt. Anhand des Radschlupfes kann somit in Korrelation mit einem gezielten Kraftfreischalten einzelner Achsen eine Zuordnungsprüfung zwischen den Sensoren S1 bis S4 und den zugeordneten Sensoranschlüssen SA1 bis SA4 des Fahrzeugsteuergeräts 50 erfolgen.

In den Figuren 1 und 2 wird beispielhaft davon ausgegangen, dass alle Achsen jeweils mit einer Antriebseinheit und einer Bremseinheit ausgestattet sind; dies ist nur beispielhaft zu verstehen. Selbstverständlich müssen nicht alle Achsen mit Bremseinheiten und Antriebseinheiten ausgestattet sein. Die oben beschriebenen Zuordnungsverfahren lassen sich in analoger Form auch für Achsen durchführen, die nur mit einer Bremse oder nur mit einem Antrieb ausgestattet sind.

Das Fahrzeugsteuergerät 50 ist vorzugsweise derart ausgestaltet, dass es im Falle eines erkannten Verkabelungsfehlers die Zuordnung zwischen den Sensoranschlüssen SA1-SA4 und den Sensoren S1-S4 intern durch Umparametrierung des Fahrzeugsteuermodulmoduls FSM an die festgestellte tatsächliche Anschlusssituation korrigiert.

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden.

Auch können alle Merkmale von Unteransprüchen jeweils für sich mit jedem der nebengeordneten Ansprüche kombiniert werden, und zwar jeweils für sich allein oder in beliebiger Kombination mit einem oder anderen Unteransprüchen, um weitere andere Ausführungsbeispiele zu erhalten.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren zum Überprüfen des Zustands eines Fahrzeugs, das zwei oder mehr Achsen (A1-A4) sowie zwei oder mehr Sensoren (S1-S4) aufweist, die auswertungsseitig jeweils einer der Achsen (A1-A4) zugeordnet sind,
**dadurch gekennzeichnet, dass**
eine Zuordnungsprüfung durchgeführt wird, bei der
- eine der Achsen (Ai) gezielt anders beschleunigt oder gebremst wird als die anderen Achsen (Aj) des Fahrzeugs,
- mit den Sensoren (S1-S4) Messwerte (M) erfasst werden, die die Drehzahl oder die Rotationsbeschleunigung der dem jeweiligen Sensor (S1-S4) physikalisch zugeordneten Achse (A1-A4) angeben,
- derjenige Sensor (Se) ermittelt wird, der die zu der anders beschleunigten oder gebremsten Achse (Ai) am besten passenden Messwerte (M) erzeugt, und
- geprüft wird, ob der so ermittelte Sensor (Se) auswertungsseitig tatsächlich der anders beschleunigten oder gebremsten Achse (Ai) zugeordnet ist.

2. Verfahren nach Anspruch 1,
**dadurch gekennzeichnet, dass**
ein Fehlersignal (FS) erzeugt wird, wenn der ermittelte Sensor (Se) auswertungsseitig einer anderen Achse (Aj) als der anders beschleunigten oder gebremsten Achse (Ai) zugeordnet ist.

3. Verfahren nach einem der voranstehenden Ansprüche,
**dadurch gekennzeichnet, dass**
ein Bestätigungssignal (BS) erzeugt wird, wenn der ermittelte Sensor (Se) tatsächlich auswertungsseitig der anders beschleunigten oder gebremsten Achse (Ai) zugeordnet ist.

4. Verfahren nach einem der voranstehenden Ansprüche,
**dadurch gekennzeichnet, dass**
nacheinander jede der Achsen (A1-A4) jeweils einer Zuordnungsprüfung unterzogen wird, bei der geprüft wird, ob der der Zuordnungsprüfung unterzogenen Achse (Ai) auswertungsseitig der richtige Sensor (Se) zugeordnet ist, indem
- die der Zuordnungsprüfung unterzogene Achse (Ai) gezielt anders beschleunigt oder gebremst wird als die anderen Achsen (Aj) des Fahrzeugs,
- während der Zuordnungsprüfung mit den Sensoren (S1-S4) Messwerte (M) erfasst werden, die die Drehzahl oder die Rotationsbeschleunigung der jeweils physikalisch zugeordneten Achse (A1-A4) angeben,
- derjenige Sensor (Se) ermittelt wird, der die zu der anders beschleunigten oder gebremsten Achse (Ai) am besten passenden Messwerte (M) erzeugt, und
- geprüft wird, ob der so ermittelte Sensor (Se) auswertungsseitig tatsächlich der der Zuordnungsprüfung unterzogenen Achse (Ai) zugeordnet ist.

5. Verfahren nach Anspruch 4,
**dadurch gekennzeichnet, dass**
für jede der Achsen (A1-A4) ein Fehlersignal (FS) erzeugt wird, für die im Rahmen der Zuordnungsprüfung festgestellt wird, dass der ermittelte Sensor (Se) auswertungsseitig einer anderen Achse (Aj) als der geprüften Achse (Ai) zugeordnet ist.

6. Verfahren nach einem der voranstehenden Ansprüche 4 oder 5,
**dadurch gekennzeichnet, dass**
für jede der Achsen (A1-A4) ein Bestätigungssignal (BS) erzeugt wird, für die im Rahmen der Zuordnungsprüfung festgestellt wird, dass der ermittelte Sensor (Se) auswertungsseitig der geprüften Achse (Ai) zugeordnet ist.

7. Verfahren nach einem der voranstehenden Ansprüche,
**dadurch gekennzeichnet, dass**
- die der Zuordnungsprüfung unterzogene Achse (Ai) stärker als die anderen Achsen (Aj) beschleunigt oder gebremst wird,
- ermittelt wird, welcher der Sensoren (S1-S4) die höchste Drehzahländerung anzeigt, und
- geprüft wird, ob der so ermittelte Sensor (Se) auswertungsseitig tatsächlich der stärker beschleunigten oder gebremsten Achse (Ai) zugeordnet ist.

8. Verfahren nach einem der voranstehenden Ansprüche,
**dadurch gekennzeichnet, dass**
die Achsen (Aj), die während des Verfahrens nicht der Zuordnungsprüfung unterzogen werden, unbeschleunigt oder ungebremst betrieben werden.

9. Verfahren nach einem der voranstehenden Ansprüche,
**dadurch gekennzeichnet, dass**
- die der Zuordnungsprüfung unterzogene Achse (Ai) gemäß einem vorgegebenen zeitlichen Ansteuermuster beschleunigt oder gebremst wird und die übrigen Achsen (Aj) anders beschleunigt oder gebremst werden oder kräftefrei betrieben werden,
- ermittelt wird, ob bei einem einzigen Sensor (S1-S4) die Messwerte (M) mit dem Ansteuermuster über ein vorgegebenes Mindestmaß hinaus korreliert sind, und
- falls dies der Fall ist, geprüft wird, ob der so ermittelte einzige Sensor (Se) auswertungsseitig der der Zuordnungsprüfung unterzogenen Achse (Ai) zugeordnet ist.

10. Verfahren nach einem der voranstehenden Ansprüche 1 bis 6,
**dadurch gekennzeichnet, dass**
- die der Zuordnungsprüfung unterzogene Achse (Ai) kraftfrei betrieben wird und die anderen Achsen (Aj) gebremst oder beschleunigt werden,
- in einem ersten Schritt geprüft wird, ob ein einziger der Sensoren (S1-S4) einen Radschlupf unterhalb einer vorgegebenen ersten Radschlupfschwelle anzeigt und die übrigen Sensoren (S1-S4) einen Radschlupf oberhalb einer vorgegebenen zweiten Radschlupfschwelle, die mindestens so groß wie die erste Radschlupfschwelle ist, anzeigen, und
- falls dies der Fall ist, in einem zweiten Schritt geprüft wird, ob der so ermittelte einzige Sensor (Se) auswertungsseitig tatsächlich der kräftefreien Achse (Ai) zugeordnet ist.

11. Verfahren nach einem der voranstehenden Ansprüche,
**dadurch gekennzeichnet, dass**
das Fahrzeug ein Schienenfahrzeug (10) ist und das Verfahren bei gegenüber trockener Schiene reduzierten Haftwertbedingungen durchgeführt wird.

12. Verfahren nach einem der voranstehenden Ansprüche,
**dadurch gekennzeichnet, dass**
nach Abschluss der Zuordnungsprüfungen eine Fehlertabelle(FT) erzeugt wird, die diejenigen Achsen (A1-A4) und/oder Sensoren (S1-S4) identifiziert, bei denen die auswertungsseitige Zuordnung zwischen Achse (A1-A4) und Sensor (S1-S4) falsch ist.

13. Fahrzeug, das zwei oder mehr Achsen (A1-A4) und zwei oder mehr Sensoren (S1-S4) aufweist, die jeweils einer der Achsen (A1-A4) zugeordnet sind,
**dadurch gekennzeichnet, dass**
eine Zuordnungsprüfeinrichtung vorhanden ist, die dazu ausgestaltet ist, eine Zuordnungsprüfung nach einem der voranstehenden Ansprüche durchzuführen.

14. Fahrzeug nach Anspruch 13,
**dadurch gekennzeichnet, dass**
die Zuordnungsprüfeinrichtung durch ein Softwaremodul (ZPM) gebildet wird, das in einem Fahrzeugsteuergerät (50) des Fahrzeugs integriert ist.
